# EUROPEAN PATENT APPLICATION

(11) **EP 2 924 985 A1**
(43) Date of publication of application: **30.09.2015**
(21) Application number: 13856801.9
(22) Date of filing: 25.10.2013
(51) Int. Cl.: H04N 7/15

(54) **LOW-BIT-RATE VIDEO CONFERENCE SYSTEM AND METHOD, SENDING END DEVICE, AND RECEIVING END DEVICE**

(30) Priority: 23.11.2012 CN 201210480773
(71) Applicant: ZTE Corporation, Shenzhen, Guangdong 518057 (CN)
(72) Inventor: LI, Xia, Shenzhen Guangdong 518057 (CN); FU, Xianhui, Shenzhen Guangdong 518057 (CN); ZHANG, Kai, Shenzhen Guangdong 518057 (CN); XIU, Yan, Shenzhen Guangdong 518057 (CN)
(74) Representative: Tischner, Oliver
(86) International application number: PCT/CN2013/086009
(87) International publication number: WO 2014/079302

(57) **Abstract**

Provided is a low-data-rate video conference method. A sender acquires audio data and video data, forms audio characteristic mapping and video characteristic mapping respectively, acquires a local dynamic image, and transmits the audio data and the local dynamic image to a receiver; and the receiver organizes an audio characteristic and video characteristic, which are extracted from local end audio characteristic mapping and video characteristic mapping, and the received local dynamic image to synthesize the original video data, and plays the audio data. In addition, a low-data-rate video conference data transmission system, sender equipment and receiver equipment are provided. As a result, bandwidths can be saved, and increasing video service conference requirements can be met.

## Description

### TECHNICAL FIELD

The present disclosure relates to the field of multimedia communications, and in particular to a low-data-rate video conference system, a low-data-rate video conference data transmission method, sender equipment and receiver equipment.

### BACKGROUND

A video conference system is for remote, multipoint and real-time conferencing and for video and sound transmission and interaction among multiple points. A video conference system is mainly composed of terminals and a Micro Controller Unit (MCU). In a small video conference system, multiple terminals are generally connected to an MCU in a centralized manner to form a star topological network. The terminals are customer premise equipment, and are provided with multimedia parts such as displays, cameras, loudspeakers and microphones; and the MCU is system end equipment, which exchanges and processes multimedia information of each terminal in the centralized manner.

A video conference system, which is a kind of system integrating a network, a video and an audio, has a high requirement on the network. A network bandwidth is actually the basis of the whole video conference, and its use in the video conference is relatively complicated due to the fact that different bandwidth requirements are made according to different needs, such as the number of attendees, the number of spokesmen and sizes of images. Many users expect to adopt high-resolution images as much as possible, and compared with that of an image with a resolution of 320*240, the data volume of an image with a resolution of 640*480 is increased by 4 times. Compared with the data volume of 10 conference halls, the data volume of 20 conference halls is doubled. In many conferences, screens for sharing information with branch companies are required; although such a function is very valuable, a 1,024*768 screen is a very large image, and high traffic is also generated. As a consequence, if there is no enough bandwidth, videos we see may jitter, sounds we hear may be mixed with noise, and the whole video conference may not be normally continued. Many enterprises adopt private line networks at present, which substantially may ensure network bandwidths required by video conference systems, however, private line cost is very high.

From the above, the transmission of video data may occupy a great bandwidth, and video data with a higher resolution is transmitted for an optimal display effect, thereby causing more bandwidth occupied. For the problem of high bandwidth occupation during the transmission of video data, there is yet no effective solution in an existing technology.

### SUMMARY

In view of this, the embodiments of the present disclosure provide a low-data-rate video conference system and method, sender equipment and receiver equipment, so as to save bandwidths and enable a bandwidth of an Internet Protocol (IP) network to meet increasing video service conference requirements.

In order to achieve the purpose, the technical solutions of the embodiments of the present disclosure are implemented as follows.

An embodiment of the present disclosure provides a low-data-rate video conference system, which includes: a sender and a receiver, wherein
the sender is configured to acquire audio data and video data, form audio characteristic mapping and video characteristic mapping respectively, acquire a local dynamic image, and transmit the audio data and the local dynamic image to the receiver; and
the receiver is configured to organize an audio characteristic and a video characteristic, which are extracted from local end audio characteristic mapping and video characteristic mapping, and the local dynamic image to synthesize original video data, and play the audio data.

The sender may include an acquisition unit, a recognition unit, a characteristic mapping unit and a sending unit;
the receiver may include a receiving unit, a characteristic extraction and comparison unit and a data synthesis and output unit;
wherein the acquisition unit is configured to acquire the audio data and the video data, and send the acquired audio data and video data to the recognition unit;
the recognition unit is configured to recognize an identity of a spokesman, perform voice recognition on the acquired audio data to acquire an audio characteristic, perform image recognition on the acquired video data to acquire a video characteristic and the local dynamic image, and send the audio characteristic, the video characteristic and the local dynamic image to the characteristic mapping unit;
the characteristic mapping unit is configured to query whether the audio characteristic mapping and the video characteristic mapping have existed or not, and if the audio characteristic mapping and the video characteristic mapping are not found, generate audio characteristic mapping and video characteristic mapping respectively according to the audio characteristic and the video characteristic;
the sending unit is configured to send the audio data and the local dynamic image, wherein the identity of the spokesman being contained in a code of the audio data;
the receiving unit is configured to receive the audio data and the local dynamic image;
the characteristic extraction and comparison unit is configured to extract the identity of the spokesman from the code of the audio data, query the audio characteristic mapping and video characteristic mapping that have existed already, extract the audio characteristic from the audio characteristic mapping according to the identity of the spokesman, and extract the video characteristic from the video characteristic mapping; and
the data synthesis and output unit is configured to synthesize and restore the original video data using the extracted video characteristic and the received local dynamic image, and output the audio data and the original video data according to the audio characteristic.

In the solution, the recognition unit may be configured to recognize the identity of the spokesman and a conference number of a conference which the spokesman is attending, and form an identity code by virtue of the identity of the spokesman and the conference number, where an identity characteristic corresponding to the acquired audio data and video data being identified by the identity code or by the identity of the spokesman.

In the solution, the characteristic mapping unit may be configured to make a query at the sender or a network database; to adopt the local end audio characteristic mapping and video characteristic mapping under a condition that the audio characteristic mapping and the video characteristic mapping are found at the sender; to download the audio characteristic mapping and the video characteristic mapping from the network database to the sender under a condition that the audio characteristic mapping and the video characteristic mapping are found from the network database; and to locally generate audio characteristic mapping and video characteristic mapping under a condition that the audio characteristic mapping and the video characteristic mapping are not found from the sender or the network database.

In the solution, the audio characteristic mapping may consist of the identity of the spokesman and an audio characteristic corresponding to the identity of the spokesman; or the audio characteristic mapping may consist of an identity code and an audio characteristic corresponding to the identity code, where the identity code is formed by the identity of the spokesman and a conference number.

In the solution, the video characteristic mapping may consist of the identity of the spokesman and a video characteristic corresponding to the identity of the spokesman; or the video characteristic mapping may consist of an identity code and a video characteristic corresponding to the identity code, wherein the identity code is formed by the identity of the spokesman and a conference number.

In the solution, the local dynamic image may include at least one kind of trajectory image information in head movement, eyeball movement, gesture and contour movement of a spokesman.

Another embodiment of the present disclosure further provides a low-data-rate video conference data transmission method, which includes that:
a sender acquires audio data and video data, forms audio characteristic mapping and video characteristic mapping respectively, acquires a local dynamic image, and transmits the audio data and the local dynamic image to a receiver; and
the receiver organizes an audio characteristic and video characteristic, which are extracted from local end audio characteristic mapping and video characteristic mapping, and the local dynamic image to synthesize original video data, and plays the audio data.

In the solution, the step that the sender forms the audio characteristic mapping may include that:
after an identity of a spokesman is recognized, the audio characteristic mapping is formed by taking the identity of the spokesman as an index keyword, wherein the audio characteristic mapping consisting of the identity of the spokesman and an audio characteristic corresponding to the identity of the spokesman; or
after an identity of a spokesman and a conference number are recognized, the audio characteristic mapping is formed by taking the identity of the spokesman and the conference number as a combined index keyword, wherein the audio characteristic mapping consisting of an identity code and an audio characteristic corresponding to the identity code, and the identity code being formed by the identity of the spokesman and the conference number.

In the solution, the step that the sender forms the video characteristic mapping may include that:
after an identity of a spokesman is recognized, the video characteristic mapping is formed by taking the identity of the spokesman as an index keyword, wherein the video characteristic mapping consisting of the identity of the spokesman and a video characteristic corresponding to the identity of the spokesman; or
after an identity of a spokesman and a conference number are recognized, the video characteristic mapping is formed by taking the identity of the spokesman and the conference number as a combined index keyword, wherein the video characteristic mapping consisting of an identity code and a video characteristic corresponding to the identity code, and the identity code being formed by the identity of the spokesman and the conference number.

In the solution, before the audio characteristic mapping and the video characteristic mapping are formed, the method may further include that: query is made at the sender and a network database; the local end audio characteristic mapping and video characteristic mapping are adopted under a condition that the audio characteristic mapping and the video characteristic mapping are found at the sender; the audio characteristic mapping and the video characteristic mapping are downloaded to the sender from the network database under a condition that the audio characteristic mapping and the video characteristic mapping are found from the network database; and audio characteristic mapping and video characteristic mapping are locally generated under a condition that the audio characteristic mapping and the video characteristic mapping are not found from the sender or the network database.

In the solution, the local dynamic image may include at least one kind of trajectory image information in head movement, eyeball movement, gesture and contour movement of the spokesman.

One embodiment of the present disclosure further provides sender equipment for a low-data-rate video conference system, which is configured to acquire audio data and video data, form audio characteristic mapping and video characteristic mapping respectively, acquire a local dynamic image, and transmit the audio data and the local dynamic image to a receiver.

In the solution, the sender equipment may includes an acquisition unit, a recognition unit, a characteristic mapping unit and a sending unit, wherein
the acquisition unit is configured to acquire the audio data and the video data, and send the acquired audio data and video data to the recognition unit;
the recognition unit is configured to recognize an identity of a spokesman, perform voice recognition on the acquired audio data to acquire an audio characteristic, perform image recognition on the acquired video data to acquire a video characteristic and the local dynamic image, and send the audio characteristic, the video characteristic and the local dynamic image to the characteristic mapping unit;
the characteristic mapping unit is configured to query whether the audio characteristic mapping and the video characteristic mapping have existed or not, and if the audio characteristic mapping and the video characteristic mapping are not found, generate audio characteristic mapping and video characteristic mapping respectively according to the audio characteristic and the video characteristic; and
the sending unit is configured to send the audio data and the local dynamic image, the identity of the spokesman being contained in a code of the audio data.

One embodiment of the present disclosure further provides receiver equipment for a low-data-rate video conference system, which is configured to organize an audio characteristic and a video characteristic, which are extracted from local end audio characteristic mapping and video characteristic mapping, and a local dynamic image received from a sender to synthesize original video data, and play audio data.

In the solution, the receiver equipment may include a receiving unit, a characteristic extraction and comparison unit, and a data synthesis and output unit, wherein
the receiving unit is configured to receive the audio data and the local dynamic image;
the characteristic extraction and comparison unit is configured to extract an identity of a spokesman from a code of the audio data, query about the audio characteristic mapping and video characteristic mapping that have existed already, extract the audio characteristic from the audio characteristic mapping according to the identity of the spokesman, and extract the video characteristic from the video characteristic mapping; and
the data synthesis and output unit is configured to synthesize and restore the original video data using the extracted video characteristic and the local dynamic image, and output the audio data and the original video data according to the audio characteristic.

According to the system in the embodiment of the present disclosure, the sender acquires audio data and video data, forms audio characteristic mapping and video characteristic mapping respectively, and acquires a local dynamic image, and the sender transmits the audio data and the local dynamic image to the receiver; the receiver organizes the audio characteristic and video characteristic, which are extracted from the local end audio characteristic mapping and video characteristic mapping, and the received local dynamic image to synthesize original video data, and plays the audio data.

It is not complete video data but a local dynamic image transmitted. A receiver organizes the extracted audio characteristic and video characteristic and the received local dynamic image to synthesize the original video data, and plays audio data, so that the volume of transmitted data is controlled, the volume of the transmitted data is reduced, bandwidths are saved, and a requirement of a video service conference is met.

### BRIEF DESCRIPTION OF THE DRAWINGS

Fig. 1 is a structure diagram illustrating the composition principle of a system according to an embodiment of the present disclosure;
Fig. 2 is a implementation flowchart of the principle of a method according to an embodiment of the present disclosure;
Fig. 3 is a diagram of an application example of identity establishment according to an embodiment of the present disclosure;
Fig. 4 is a diagram of an application example of audio mapping establishment according to an embodiment of the present disclosure;
Fig. 5 is a diagram of an application example of video mapping establishment according to an embodiment of the present disclosure;
Fig. 6 is a diagram of an application example of dynamic image acquisition according to an embodiment of the present disclosure;
Fig. 7 is a diagram of an application example of an audio processing flow at a sender according to an embodiment of the present disclosure;
Fig. 8 is a diagram of an application example of a video processing flow at a sender according to an embodiment of the present disclosure; and
Fig. 9 is a diagram of an application example of a video synthesis processing flow at a receiver according to an embodiment of the present disclosure.

### DETAILED DESCRIPTION

In the embodiments of the present disclosure, a sender acquires audio data and video data, forms audio characteristic mapping and video characteristic mapping respectively, and acquires a local dynamic image; the sender transmits the audio data and the local dynamic image to a receiver, and the receiver organizes an audio characteristic and video characteristic, which are extracted from local end audio characteristic mapping and video characteristic mapping, and the received local dynamic image to synthesize the original video data, and plays the audio data.

In consideration that the vast majority of a bandwidth required by a video conference is video data and that a video conference of an enterprise or organ has characteristics that, for example, attendees are substantially fixed, and the focus is the spokesman in the conference, particularly the eyes, mouth shape and gesture of the spokesman, thus it can be concluded by analysis that in order to improve bandwidth usage, video data in a video conference is split at a sender rather than being directly transmitted in the video conference, and then the video data is integrated to restore original video data at a receiver. Since the video data is not directly transmitted during transmission, compared with the existing technology, the present disclosure has the advantage that the volume of transmitted data is reduced, an occupied bandwidth during the transmission of the video data is reduced, and there is no need to sacrifice of quality of the video data out of the worry about high bandwidth occupation caused by transmitted high-resolution video data, i.e. replacing high-resolution video data with low-resolution video data. According to the embodiments of the present disclosure, video data is split rather than being directly transmitted, therefore, it is not needed to worry about the problem of high bandwidth occupation, the bandwidth is within a controllable range, and moreover, high-resolution video data with an optimal display effect can be obtained with the bandwidth within such a controllable range.

The implementation of the technical solutions is further described below with reference to the drawings in detail.

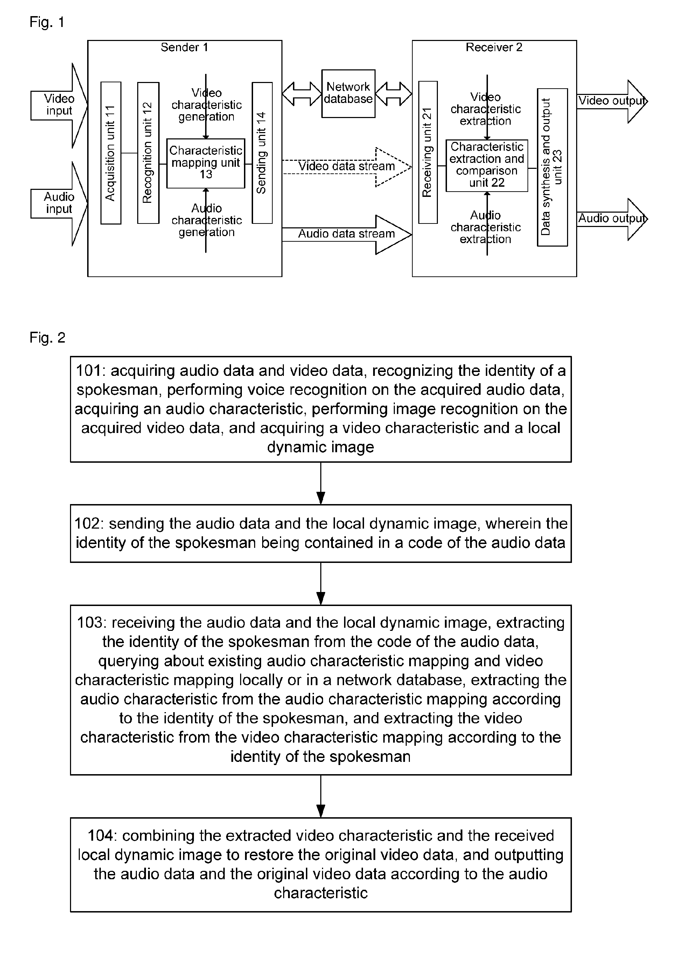

Fig. 1 shows a low-data-rate video conference system according to an embodiment of the present disclosure, the system including a sender 1 and a receiver 2, wherein
the sender 1 is configured to acquire audio data and video data, form audio characteristic mapping and video characteristic mapping respectively, acquire a local dynamic image, and transmit the audio data and the local dynamic image to the receiver 2; and
the receiver 2 is configured to organize an audio characteristic and video characteristic, which are extracted from local end audio characteristic mapping and video characteristic mapping, and the received local dynamic image to synthesize the original video data, and play the audio data.

Preferably, the sender 1 includes an acquisition unit 11, a recognition unit 12, a characteristic mapping unit 13 and a sending unit 14, wherein
the acquisition unit 11 is configured to acquire the audio data and the video data, and send the acquired audio data and video data to the recognition unit; and
the recognition unit 12 is configured to recognize the identity of a spokesman, perform voice recognition on the acquired audio data and acquire an audio characteristic, perform image recognition on the acquired video data and acquire a video characteristic and the local dynamic image, and send the audio characteristic, the video characteristic and the local dynamic image to the characteristic mapping unit 13.

Here, besides the identity of the spokesman, the conference number of a conference which the spokesman is attending may further be recognized, and an identity code is generated according to the identity of the spokesman and the conference number.

Here, the video characteristic includes a background image characteristic of the conference and an image characteristic of the spokesman. The local dynamic image includes at least one kind of trajectory image information in head movement, eyeball movement, gesture and contour movement of the spokesman.

Here, the recognition unit 12 may further be divided into a voice recognition subunit and an image recognition subunit, wherein the voice recognition subunit is configured to perform voice recognition on the acquired audio data and acquire an audio characteristic; and the image recognition subunit is configured to perform image recognition on the acquired video data and acquire a video characteristic and the local dynamic image.

The characteristic mapping unit 13 is configured to query whether the audio characteristic mapping and the video characteristic mapping have existed or not, and to, if the audio characteristic mapping and the video characteristic mapping are not found, generate audio characteristic mapping according to the identity of the spokesman and the received audio characteristic, generate video characteristic mapping according to the identity of the spokesman and the received video characteristic, and locally store the audio characteristic mapping and the video characteristic mapping, or upload the audio characteristic mapping and the video characteristic mapping to a network database for storage and subsequent query.

Here, both of the audio characteristic mapping and the video characteristic mapping may adopt the identity of the spokesman as an index keyword of mapping, and the mapping may further include a conference number and adopt the identity of the spokesman and the conference number as a combined index keyword of the mapping.

Here, the characteristic mapping unit 13 may further be divided into an audio characteristic mapping subunit and a video characteristic mapping subunit. The audio characteristic mapping subunit is configured to query whether the audio characteristic mapping has existed at the sender or the network database or not, and to, if the audio characteristic mapping cannot be found, generate audio characteristic mapping according to the identity of the spokesman and the received audio characteristic, and locally store the audio characteristic mapping, or upload the audio characteristic mapping to the network database for storage and subsequent query. The video characteristic mapping subunit is configured to query whether the video characteristic mapping has existed at the sender or the network database or not, and to, if the video characteristic mapping cannot be found, generate video characteristic mapping according to the identity of the spokesman and the received video characteristic, and locally store the video characteristic mapping, or upload the video characteristic mapping to the network database for storage and subsequent query.

The sending unit 14 is configured to send the audio data and the local dynamic image, wherein the identity of the spokesman or the identity code being contained in a code of the audio data.

If the audio data is sent, extraction is not required, and only the video characteristic is required to be extracted from the video characteristic mapping for organization and combination according to the identity of the spokesman. Of course, the receiver is required to extract the audio characteristic from the audio characteristic mapping for organization and combination according to the identity of the spokesman when only the local dynamic image is sent. When the sending unit sends the identity code, the identity code consists of the identity of the spokesman and the conference number. The receiver organizes and combines the audio characteristic, video characteristic and local dynamic image, which correspond to the identity code, to restore the original video data, and plays the audio data, so that the expression/mouth shape/gesture/bending degree and the like of the current spokesman in the conference can be vividly restored at the receiver by virtue of processing of interaction between the sender and the receiver. Moreover, during transmission, only the local dynamic image is required to be sent, the complete video data is not required to be sent, and the audio/video characteristic of the acquired audio/video data is stored in both the sender and the receiver, and is also backed up in the network database; in such a manner, when the original video data is restored after organization and combination of data and the audio data is played, only the corresponding audio/video data is required to be extracted from the audio/video characteristic mapping at the receiver or the network database according to the identity of the spokesman, and then is synthesized with the received local dynamic image; therefore, simplicity and easiness in operation are achieved, the volume of the transmitted data is reduced, and bandwidths are saved. Worry about that high-resolution video data cannot be transmitted and displayed is also eliminated.

The above is actually each functional unit of sender equipment of the system, and each function unit of receiver equipment of the system is described below.

The receiver 2 includes a receiving unit 21, a characteristic extraction and comparison unit 22 and a data synthesis and output unit 23, wherein
the receiving unit 21 is configured to receive the audio data and the local dynamic image; and
the characteristic extraction and comparison unit 22 is configured to extract the identity of the spokesman from the audio data, query about the existing audio characteristic mapping and video characteristic mapping, extract the audio characteristic from the audio characteristic mapping according to the identity of the spokesman, and extract the video characteristic from the video characteristic mapping according to the identity of the spokesman.

Here, when the audio data contains the identity of the spokesman, the audio characteristic mapping and the video characteristic mapping are queried by taking the identity of the spokesman as an index keyword. If the audio data does not contain the identity of the spokesman, but contains the identity code formed by the identity of the spokesman and the conference number, the audio characteristic mapping and the video characteristic mapping are queried by taking the identity code as a combined index keyword.

Here, the characteristic extraction and comparison unit 22 may further be divided into an audio characteristic extraction and comparison subunit and a video characteristic extraction and comparison subunit. The audio characteristic extraction and comparison subunit is configured to extract the identity of the spokesman from the audio data, query about the existing audio characteristic mapping from the receiver or the network database, and extract the audio characteristic from the audio characteristic mapping according to the identity of the spokesman; and the video characteristic extraction and comparison subunit is configured to extract the video characteristic from the video characteristic mapping according to the identity of the spokesman.

The data synthesis and output unit 23 is configured to synthesize and restore the original video data using the extracted video characteristic and the received local dynamic image, and output the audio data and the original video data according to the audio characteristic.

During a practical application, all of the acquisition unit 11, the recognition unit 12, the characteristic mapping unit 13, the sending unit 14, the receiving unit 21, the characteristic extraction and comparison unit 22 and the data synthesis and output unit 23 may be implemented by a Central Processing Unit (CPU), a Digital Signal Processor (DSP), a Field Programmable Gate Array (FPGA) and the like; and the CPU, the DSP and the FPGA may be built in the video conference system.

Fig. 2 shows a low-data-rate video conference data transmission method according to an embodiment of the present disclosure, the method including the following steps:
Step 101: audio data and video data are acquired, the identity of a spokesman is recognized, voice recognition is performed on the acquired audio data and an audio characteristic is acquired, and image recognition is performed on the acquired video data and a video characteristic and a local dynamic image are acquired;
Step 102: the audio data and the local dynamic image are sent, wherein the identity of the spokesman is contained in a code of the audio data;
Step 103: the audio data and the local dynamic image are received, the identity of the spokesman is extracted from the code of the audio data, existing audio characteristic mapping and video characteristic mapping are queried at the receiver or in a network database, the audio characteristic is extracted from the audio characteristic mapping according to the identity of the spokesman, and the video characteristic is extracted from the video characteristic mapping according to the identity of the spokesman; and
Step 104: the extracted video characteristic and the received local dynamic image are synthesized to restore the original video data, and the audio data and the original video data are output in combination with the audio characteristic.

In addition, the embodiment of the present disclosure further provides sender equipment for a low-data-rate video conference system. The structure and functions of the sender equipment are the same as those of the sender 1 in the abovementioned system, the sender equipment including an acquisition unit, a recognition unit, a characteristic mapping unit and a sending unit, wherein
the acquisition unit is configured to acquire audio data and video data, and send the acquired audio data and video data to the recognition unit;
the recognition unit is configured to recognize the identity of a spokesman, perform voice recognition on the acquired audio data and acquire an audio characteristic, perform image recognition on the acquired video data and acquire a video characteristic and a local dynamic image, and send the audio characteristic, the video characteristic and the local dynamic image to the characteristic mapping unit;
the characteristic mapping unit is configured to query whether audio characteristic mapping and video characteristic mapping have existed or not, and to, if the audio characteristic mapping and the video characteristic mapping cannot be found, generate audio characteristic mapping according to the identity of the spokesman and the received audio characteristic, generate video characteristic mapping according to the identity of the spokesman and the received video characteristic, and locally store the audio characteristic mapping and the video characteristic mapping, or upload the audio characteristic mapping and the video characteristic mapping to a network database for storage and subsequent query; and
the sending unit is configured to send the audio data and the local dynamic image, wherein the identity of the spokesman or an identity code being contained in a code of the audio data.

If the audio data is sent, then extraction is not required, and only the video characteristic is required to be extracted from the video characteristic mapping for organization and combination according to the identity of the spokesman. Of course, a receiver is required to extract the audio characteristic from the audio characteristic mapping for organization and combination according to the identity of the spokesman when only the local dynamic image is sent. When the sending unit sends the identity code, the identity code consists of the identity of the spokesman and a conference number. The receiver organizes and combines the audio characteristic, video characteristic and local dynamic image, which correspond to the identity code, to restore the original video data, and plays the audio data, so that the expression/mouth shape/gesture/bending degree and the like of the current spokesman in a conference can be vividly restored at the receiver by virtue of processing of interaction between the sender and the receiver. Moreover, during transmission, only the local dynamic image is required to be sent, the complete video data is not required to be sent, and the audio/video characteristic of the acquired audio/video data is stored in both the sender and the receiver, and is also backed up in the network database; in such a manner, when the original video data is organized and restored and the audio data is played, only the corresponding audio/video data is required to be extracted from the audio/video characteristic mapping at the receiver or the network database according to the identity of the spokesman, and then is synthesized with the received local dynamic image; therefore, simplicity and easiness in operation are achieved, the volume of the transmitted data is reduced, and bandwidths are saved. Worry about that high-resolution video data cannot be transmitted and displayed is also eliminated.

During a practical application, all of the acquisition unit, the recognition unit, the characteristic mapping unit and the sending unit may be implemented by a CPU, a DSP, an FPGA and the like; and the CPU, the DSP and the FPGA may be built in the video conference system.

Moreover, one embodiment of the present disclosure further provides receiver equipment for a low-data-rate video conference system. The structure and functions of the receiver equipment are the same as those of the receiver 2 in the abovementioned system, the receiver equipment includes: a receiving unit, a characteristic extraction and comparison unit and a data synthesis and output unit, wherein
the receiving unit is configured to receive audio data and a local dynamic image;
the characteristic extraction and comparison unit is configured to extract the identity of a spokesman from the audio data, query about existing audio characteristic mapping and video characteristic mapping locally or in a network database, extract an audio characteristic from the audio characteristic mapping according to the identity of the spokesman, and extract a video characteristic from the video characteristic mapping; and
the data synthesis and output unit is configured to synthesize and restore the original video data using the extracted video characteristic and the received local dynamic image, and output the audio data and the original video data according to the audio characteristic.

During a practical application, all of the receiving unit, the characteristic extraction and comparison unit and the data synthesis and output unit may be implemented by a CPU, a DSP, an FPGA and the like; and the CPU, the DSP and the FPGA may be built in the video conference system.

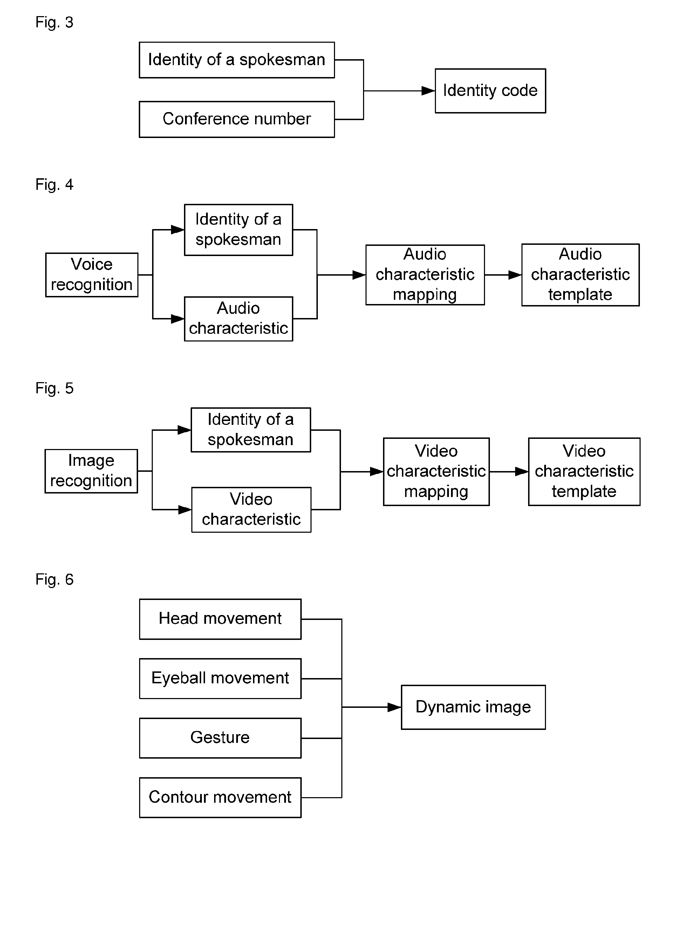

Fig. 3 is a diagram of an application example of identity establishment according to an embodiment of the present disclosure. An identity establishment process includes: acquiring the identity of a spokesman and a conference number, generating an identity code according to the identity of the spokesman and the conference number, and determining a unique identity.

Fig. 4 is a diagram of an application example of audio mapping establishment according to an embodiment of the present disclosure. An audio mapping establishment process includes that: a sender recognizes the identity of a spokesman and an audio characteristic after performing voice recognition on audio data, and stores the identity of the spokesman and the audio characteristic; the identity of the spokesman and the audio characteristic corresponding to the identity of the spokesman form audio characteristic mapping in a mapping relationship; and the audio characteristic mapping may be stored in form of an audio characteristic template. Here, the audio characteristic mapping relationship in the audio characteristic template may be indexed to the audio characteristic corresponding to the identity of the spokesman by taking the identity of the spokesman as a key value.

Fig. 5 is a diagram of an application example of video mapping establishment according to an embodiment of the present disclosure. A video mapping establishment process includes that a sender recognizes the identity of a spokesman and a video characteristic after performing image recognition on the video data, and stores the identity of the spokesman and the video characteristic; the identity of the spokesman and the video characteristic corresponding to the identity of the spokesman form video characteristic mapping in a mapping relationship; and the video characteristic mapping may be stored in form of a video characteristic template. Here, the video characteristic mapping relationship in the video characteristic template may be indexed to the video characteristic corresponding to the identity of the spokesman by taking the identity of the spokesman as a key value.

Fig. 6 is a diagram of an application example of dynamic image acquisition according to an embodiment of the present disclosure. A dynamic image acquisition process includes that a local dynamic image is obtained by acquiring contour movement, such as head movement, eyeball movement, a gesture and bending, of the spokesman. The local dynamic image includes at least one kind of trajectory image information in head movement, eyeball movement, gesture and contour movement of the spokesman.

According to the embodiment of the present disclosure, a processing flow of the sender includes: acquiring an audio/video; performing voice recognition on the acquired audio data; establishing an audio/video characteristic template; sending the audio, and acquiring and sending a dynamic characteristic image. Specifically, the audio/video processing of the sender is described as follows.

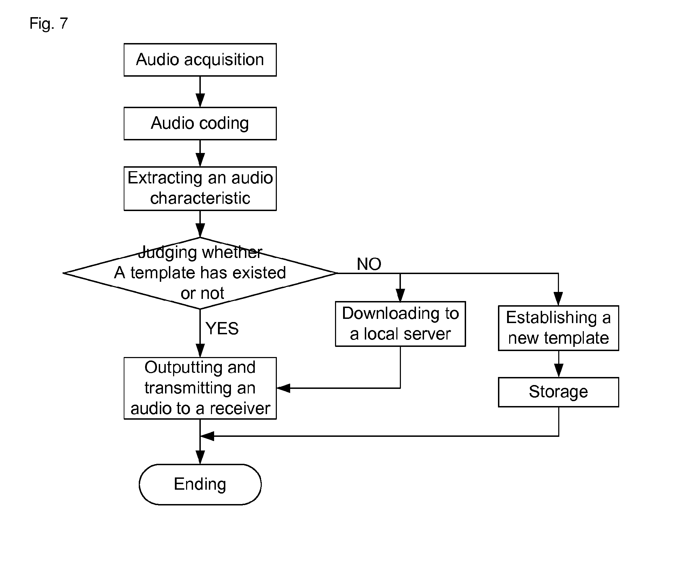

Fig. 7 is a diagram of an application example of an audio processing flow of a sender according to an embodiment of the present disclosure. The flow includes that: at a sender, a terminal acquires an audio input source signal through a microphone, and performs audio coding and voice recognition; an audio characteristic is extracted, a query is made locally to figure out whether an audio characteristic mapping template has existed or not, and the audio is output and transmitted to the receiver if the audio characteristic mapping template exists locally; if the audio characteristic mapping template does not exist locally, a query is made to figure out whether the audio characteristic mapping template exists in the network database or not, and if the audio characteristic mapping template exists in the network database, the audio characteristic mapping template is directly downloaded to a local server, and the audio is output and transmitted to the receiver; and if the audio characteristic mapping template does not exist in the network database, the audio characteristic mapping template is established and is stored locally and in the network database.

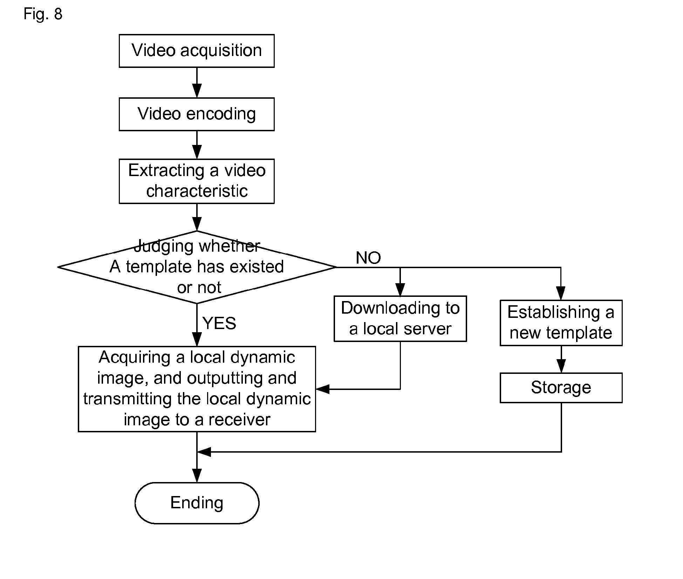

Fig. 8 is a diagram of an application example of a video processing flow of a sender according to an embodiment of the present disclosure. The flow includes that at a sender, a terminal acquires a video input source signal, and performs video encoding; the video characteristic is extracted, and the video characteristic is formed according to a background image characteristic and an image characteristic of the spokesman; a query is made to figure out whether a video characteristic mapping template exists locally or not, and if the video characteristic mapping template exists locally, the local dynamic image, such as the head moment of the spokesman, the eyeball movement, gesture and the like, of the spokesman, is acquired, and the local dynamic image is output and transmitted to the receiver; if the video characteristic mapping template does not exist locally, a query is made to figure out whether the video characteristic mapping template exists in the network database or not, and if the video characteristic mapping template exists in the network database, the video characteristic mapping template is directly downloaded to the local server, and the local dynamic image, such as the head movement of the spokesman, the eyeball movement, gesture and the like of the spokesman, is acquired, and the local dynamic image is output and transmitted to the receiver; and if the video characteristic mapping template does not exist in the network database, the video characteristic mapping template is established and stored locally and in the network database.

According to the embodiment of the present disclosure, a processing flow of the receiver includes: receiving an audio, and extracting an audio characteristic template; extracting a video characteristic template, and combining the video characteristic and the local dynamic image to restore the original video data; outputting the audio/video. Specifically, the video synthesis processing of the embodiment of the present disclosure is described as follows.

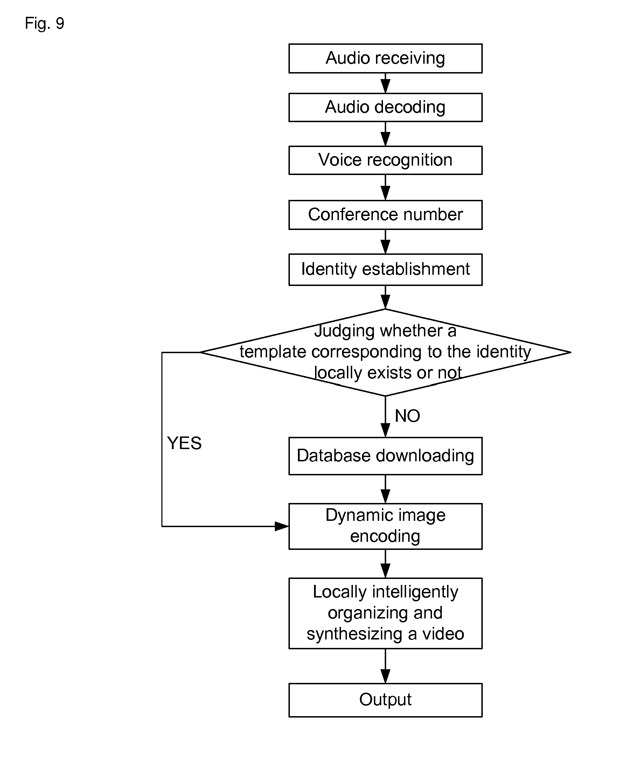

Fig. 9 is a diagram of an application example of a video integration processing flow of a receiver according to an embodiment of the present disclosure. The flow includes: receiving an audio signal, performing audio encoding, and performing identity recognition (through an identity code formed by the identity of a spokesman and a conference number); judging whether a video characteristic mapping template exists locally or not, and if the video characteristic mapping template does exist, downloading the video characteristic mapping template from the network database; if the video characteristic mapping template exists, extracting the video characteristic from the local video characteristic mapping template; receiving the local dynamic image; restoring the original video data according to the audio characteristic and video characteristic, which are extracted from the audio/video characteristic mapping template in a local server or the network database, and according to the received local dynamic image, i.e. a conference hall environment and an image, particularly the lip shape, gesture and the like, of the spokesman; and outputting the audio signal, and outputting the synthesized video signal.

The above is only the preferred embodiments of the present disclosure and not intended to limit the scope of protection of the present disclosure.

### INDUSTRIAL PRACTICABILITY

According to the low-data-rate video conference system and method provided by the embodiments of the present disclosure, a sender acquires audio data and video data, forms audio characteristic mapping and video characteristic mapping respectively, acquires a local dynamic image, and transmits the audio data and the local dynamic image to a receiver. By the technical solutions of the embodiments of the present disclosure, the sender is not required to transmit complete video data, and is only required to transmit the local dynamic image to the receiver, and the receiver organizes the extracted audio characteristic and video characteristic and the received local dynamic image to synthesize the original video data, and plays the audio data. Therefore, the volume of transmitted data is controlled, the volume of the transmitted data is reduced, bandwidths are saved, and the requirement of a video service conference is met.

## Claims

1. A low-data-rate video conference system, comprising a sender and a receiver, wherein
the sender is configured to acquire audio data and video data, form audio characteristic mapping and video characteristic mapping respectively, acquire a local dynamic image, and transmit the audio data and the local dynamic image to the receiver; and
the receiver is configured to organize an audio characteristic and a video characteristic, which are extracted from local end audio characteristic mapping and video characteristic mapping, and the local dynamic image to synthesize original video data, and play the audio data.

2. The system according to claim 1, wherein the sender comprises an acquisition unit, a recognition unit, a characteristic mapping unit and a sending unit;
the receiver comprises a receiving unit, a characteristic extraction and comparison unit and a data synthesis and output unit;
wherein the acquisition unit is configured to acquire the audio data and the video data, and send the acquired audio data and video data to the recognition unit;
the recognition unit is configured to recognize an identity of a spokesman, perform voice recognition on the acquired audio data to acquire an audio characteristic, perform image recognition on the acquired video data to acquire a video characteristic and the local dynamic image, and send the audio characteristic, the video characteristic and the local dynamic image to the characteristic mapping unit;
the characteristic mapping unit is configured to query whether the audio characteristic mapping and the video characteristic mapping have existed or not, and if the audio characteristic mapping and the video characteristic mapping are not found, generate audio characteristic mapping and video characteristic mapping respectively according to the audio characteristic and the video characteristic;
the sending unit is configured to send the audio data and the local dynamic image, where the identity of the spokesman being contained in a code of the audio data;
the receiving unit is configured to receive the audio data and the local dynamic image;
the characteristic extraction and comparison unit is configured to extract the identity of the spokesman from the code of the audio data, query about the audio characteristic mapping and video characteristic mapping that have existed already, extract the audio characteristic from the audio characteristic mapping according to the identity of the spokesman, and extract the video characteristic from the video characteristic mapping; and
the data synthesis and output unit is configured to synthesize and restore the original video data using the extracted video characteristic and the local dynamic image, and output the audio data and the original video data according to the audio characteristic.

3. The system according to claim 2, wherein the recognition unit is configured to recognize the identity of the spokesman and a conference number of a conference which the spokesman is attending, and form an identity code by virtue of the identity of the spokesman and the conference number, where an identity characteristic corresponding to the acquired audio data and video data being identified by the identity code or by the identity of the spokesman.

4. The system according to claim 2, wherein the characteristic mapping unit is configured to make a query at the sender or a network database; to adopt the local end audio characteristic mapping and video characteristic mapping under a condition that the audio characteristic mapping and the video characteristic mapping are found at the sender; to download the audio characteristic mapping and the video characteristic mapping from the network database to the sender under a condition that the audio characteristic mapping and the video characteristic mapping are found from the network database; and to locally generate audio characteristic mapping and video characteristic mapping under a condition that the audio characteristic mapping and the video characteristic mapping are not found from the sender or the network database.

5. The system according to claim 2, wherein the audio characteristic mapping consists of the identity of the spokesman and an audio characteristic corresponding to the identity of the spokesman; or the audio characteristic mapping consists of an identity code and an audio characteristic corresponding to the identity code, where the identity code is formed by the identity of the spokesman and a conference number.

6. The system according to claim 2, wherein the video characteristic mapping consists of the identity of the spokesman and a video characteristic corresponding to the identity of the spokesman; or the video characteristic mapping consists of an identity code and a video characteristic corresponding to the identity code, wherein the identity code is formed by the identity of the spokesman and a conference number.

7. The system according to any one of claims 1 to 6, wherein the local dynamic image comprises at least one kind of trajectory image information in head movement, eyeball movement, gesture and contour movement of a spokesman.

8. A low-data-rate video conference data transmission method, comprising:
acquiring, by a sender, audio data and video data, forming audio characteristic mapping and video characteristic mapping respectively, acquiring a local dynamic image, and transmitting the audio data and the local dynamic image to a receiver; and
organizing, by the receiver, an audio characteristic and a video characteristic, which are extracted from local end audio characteristic mapping and video characteristic mapping, and the local dynamic image to synthesize original video data, and playing the audio data.

9. The method according to claim 8, wherein the step of forming the audio characteristic mapping comprises:
after an identity of a spokesman is recognized, forming the audio characteristic mapping by taking the identity of the spokesman as an index keyword, wherein the audio characteristic mapping consisting of the identity of the spokesman and an audio characteristic corresponding to the identity of the spokesman; or
after an identity of a spokesman and a conference number are recognized, forming the audio characteristic mapping by taking the identity of the spokesman and the conference number as a combined index keyword, wherein the audio characteristic mapping consisting of an identity code and an audio characteristic corresponding to the identity code, and the identity code being formed by the identity of the spokesman and the conference number.

10. The method according to claim 8, wherein the step of forming the video characteristic mapping comprises:
after an identity of a spokesman is recognized, forming the video characteristic mapping by taking the identity of the spokesman as an index keyword, wherein the video characteristic mapping consisting of the identity of the spokesman and a video characteristic corresponding to the identity of the spokesman; or
after an identity of a spokesman and a conference number are recognized, forming the video characteristic mapping by taking the identity of the spokesman and the conference number as a combined index keyword, wherein the video characteristic mapping consisting of an identity code and a video characteristic corresponding to the identity code, and the identity code being formed by the identity of the spokesman and the conference number.

11. The method according to claim 8, before the audio characteristic mapping and the video characteristic mapping are formed, the method further comprising:
making a query at the sender and a network database; adopting the local end audio characteristic mapping and video characteristic mapping under a condition that the audio characteristic mapping and the video characteristic mapping are found at the sender; downloading the audio characteristic mapping and the video characteristic mapping from the network database to the sender under a condition that the audio characteristic mapping and the video characteristic mapping are found from the network database; and locally generating audio characteristic mapping and video characteristic mapping under a condition that the audio characteristic mapping and the video characteristic mapping are not found from the sender or the network database.

12. The method according to any one of claims 8 to 11, wherein the local dynamic image comprises at least one kind of trajectory image information in head movement, eyeball movement, gesture and contour movement of the spokesman.

13. Sender equipment for a low-data-rate video conference system, configured to acquire audio data and video data, form audio characteristic mapping and video characteristic mapping respectively, acquire a local dynamic image, and transmit the audio data and the local dynamic image to a receiver.

14. The sender equipment according to claim 13, comprising an acquisition unit, a recognition unit, a characteristic mapping unit and a sending unit, wherein
the acquisition unit is configured to acquire the audio data and the video data, and send the acquired audio data and video data to the recognition unit;
the recognition unit is configured to recognize an identity of a spokesman, perform voice recognition on the acquired audio data to acquire an audio characteristic, perform image recognition on the acquired video data to acquire a video characteristic and the local dynamic image, and send the audio characteristic, the video characteristic and the local dynamic image to the characteristic mapping unit;
the characteristic mapping unit is configured to query whether the audio characteristic mapping and the video characteristic mapping have existed or not, and if the audio characteristic mapping and the video characteristic mapping are not found, generate audio characteristic mapping and video characteristic mapping respectively according to the audio characteristic and the video characteristic; and
the sending unit is configured to send the audio data and the local dynamic image, wherein the identity of the spokesman being contained in a code of the audio data.

15. Receiver equipment for a low-data-rate video conference system, configured to organize a local dynamic image received from a sender and an audio characteristic and a video characteristic which are extracted from local end audio characteristic mapping and video characteristic mapping, to synthesize original video data, and play audio data.

16. The receiver equipment according to claim 15, comprising a receiving unit, a characteristic extraction and comparison unit and a data synthesis and output unit, wherein
the receiving unit is configured to receive the audio data and the local dynamic image;
the characteristic extraction and comparison unit is configured to extract an identity of a spokesman from a code of the audio data, query about the audio characteristic mapping and video characteristic mapping that have existed already, extract the audio characteristic from the audio characteristic mapping according to the identity of the spokesman, and extract the video characteristic from the video characteristic mapping; and
the data synthesis and output unit is configured to synthesize and restore the original video data using the extracted video characteristic and the local dynamic image, and output the audio data and the original video data according to the audio characteristic.
